# EUROPÄISCHE PATENTSCHRIFT

(11) **EP 1 432 497 B1**
(45) Veröffentlichungstag und Bekanntmachung des Hinweises auf die Patenterteilung: **22.06.2005**
(21) Anmeldenummer: 02764514.2
(22) Anmeldetag: 13.07.2002
(51) Int. Cl.: B01D 53/94, F01N 3/20, F01N 3/36

(54) **EINRICHTUNG ZUR ABGASNACHBEHANDLUNG**
DEVICE FOR SECONDARY TREATMENT OF EXHAUST GASES
DISPOSITIF DE TRAITEMENT ULTERIEUR DES GAZ D'ECHAPPEMENT

(30) Priorität: 20.09.2001 DE 10146319
(43) Veröffentlichungstag der Anmeldung: 30.06.2004
(73) Patentinhaber: ROBERT BOSCH GMBH, 70442 Stuttgart (DE)
(72) Erfinder: SCHALLER, Johannes, 71229 Leonberg (DE); BAREIS, Marc, 71706 Markgroeningen (DE); HARNDORF, Horst, 34270 Schauenburg (DE); KHATCHIKIAN, Peter, 71701 Schwieberdingen (DE)
(86) Internationale Anmeldenummer: PCT/DE2002/002573
(87) Internationale Veröffentlichungsnummer: WO 2003/026777

## Beschreibung

### Stand der Technik

Die Erfindung geht aus von einer Vorrichtung zur Nachbehandlung des Abgases einer Brennkraftmaschine nach der Gattung des unabhängigen Anspruchs. Aus der DE 196 25 447 ist bereits eine Verdampfungsvorrichtung bekannt, die dazu dienen soll, verdampften Kraftstoff in den Abgastrakt der Brennkraftmaschine einzuführen. Mit diesem einen hohlen Körper aufweisenden Verdampfer können kleine Mengen an Kraftstoff kontinuierlich dem Abgas verdampft zudosiert werden.

Die US 4,576,617 beschreibt eine Einrichtung zur Regenerierung eines Partikelfilters, bei der eine organische Flüssigkeit dem Abgastrakt zugeführt werden kann. Dabei sind Mittel zur Erhitzung der organischen Flüssigkeit vorgesehen, und es ragt eine Glühstiftkerze in den Abgastrakt hinein, während eine weitere Glühstiftkerze außerhalb des Abgastraktes die organische Flüssigkeit vorheizt, bevor sie der in den Abgastrakt hineinragenden Glühstiftkerze zugeführt wird.

### Vorteile der Erfindung

Die erfindungsgemäße Vorrichtung zur Nachbehandlung des Abgases einer Brennkraftmaschine mit den kennzeichnenden Merkmalen des unabhängigen Anspruchs hat demgegenüber den Vorteil, insbesondere bei der Anwendung im Zusammenhang mit Speicherkatalysatoren und/oder katalytischen Brennern, die thermische Aufbereitung einer ausreichenden Menge an Kraftstoff pro Zeiteinheit zu gewährleisten. Die Vorrichtung weist eine genügend hohe Heizleistung auf, um auch große Mengen an Reaktionsmittel, insbesondere Kraftstoff, gleichmäßig zu erwärmen bzw. zu verdampfen. Dadurch wird die homogene Verteilung des als Reaktionsmittel verwendeten Kraftstoffs im Abgas begünstigt. Die Vorheizelemente sind derart angeordnet, dass sich die an das Reaktionsmittel abgegebene Wärmemenge pro Zeiteinheit automatisch an dessen Durchflussmenge anpasst, um in jedem Betriebszustand der Abgasvorrichtung eine kontinuierliche Erwärmung bzw. Verdampfung des Reaktionsmittels bei geringen Energieverlusten sicherzustellen.

Vorteilhafte Weiterbildungen und Verbesserungen ergeben sich durch die in den abhängigen Ansprüchen genannten Merkmale.

Insbesondere vorteilhaft ist es, das in die Abgasleitung hineinragende Heizelement sowie das außerhalb der Abgasleitung anordenbare Vorheizelement an einem gemeinsamen Grundblock zu befestigen, da sich hierdurch eine kompakte und leicht montierbare Baueinheit ergibt.

Weiterhin ist es vorteilhaft, mehrere Vorheizelemente vorzusehen und sie derart anzuordnen, dass sie über jeweils vorgelagerte Vorheizelemente mit Reaktionsmittel versorgt werden können. Hierbei können insbesondere Standardbauteile wie Glühstiftkerzen als Heizelement verwendet werden, um eine kompakte und platzsparende Verdampfungsvorrichtung zu erhalten.

Werden sämtliche Vorheizelemente in einer Ebene senkrecht zum in die Abgasleitung ragenden Heizelement angeordnet, wird in vorteilhafter Weise eine geringe Höhe der Vorrichtung in axialer Richtung des Heizelementes erzielt. Dadurch wird es möglich, insbesondere auch bei tiefergelegten Kraftfahrzeugen, die Verdampfungsvorrichtung an der Abgasanlage im Unterbodenbereich anzubringen.

Die erfindungsgemäße Verdampfungsvorrichtung ist in vorteilhafter Weise hinsichtlich einer weiteren Steigerung der Heizleistung durch eine Erhöhung der Anzahl von Vorheizelementen variierbar, insbesondere erweist sich eine sternförmige Anordnung von Glühstiftkerzen und/oder keramischen Glühkörpern hierbei als vorteilhaft.

Weitere Vorteile ergeben sich durch die weiteren, in den abhängigen Ansprüchen und in der Beschreibung genannten Merkmale.

### Zeichnung

Ausführungsbeispiele der Erfindung sind in der Zeichnung dargestellt und in der nachfolgenden Beschreibung näher erläutert. Es zeigen
Figur 1 eine erfindungsgemäße Verdampfungsvorrichtung mit integriertem Einspritzventil,
Figur 2 eine Verdampfungsvorrichtung mit "parallel geschalteten" Vorheizelementen und
Figur 3 eine Verdampfungseinrichtung mit sternförmig angeordneten Vorheizelementen.
Figur 4 zeigt eine Anordnung mit einem katalytischen Brenner.

### Beschreibung der Ausführungsbeispiele

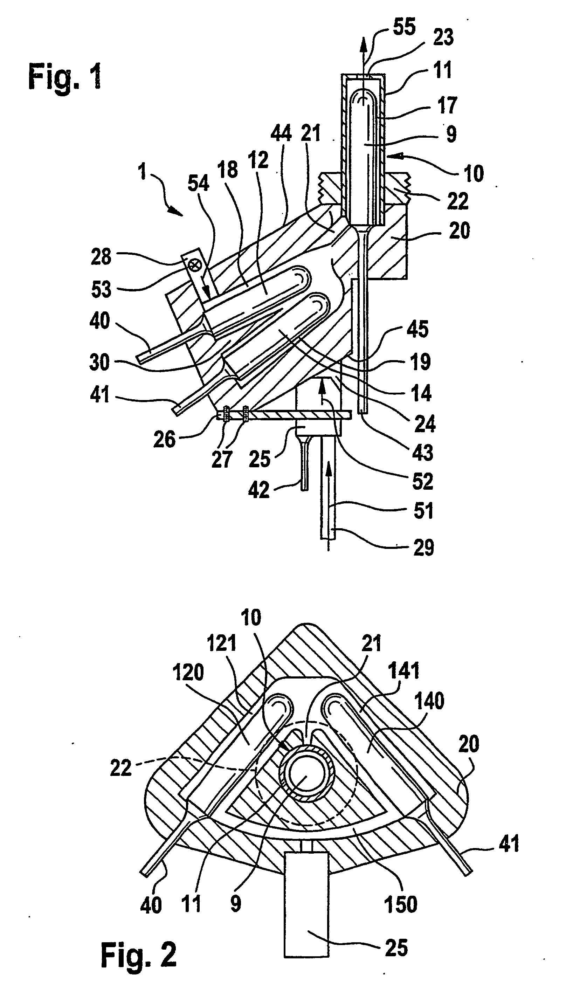

Die Verdampfungseinrichtung 1 in Figur 1 weist ein Heizelement 10 auf, das an einem beispielsweise metallischen Grundblock 20 befestigt ist. Die Anordnung ist in einer Querschnittsseitenansicht dargestellt, so dass die wesentlichen flüssigkeitsführenden Hohlräume im Inneren des Grundblocks 20 ersichtlich sind. Das Heizelement 10 weist Eine erste Glühstiftkerze 9 auf, die von einer Metallhülse 11 umgeben ist. Zwischen der Glühstiftkerze 9 besteht ein als Ringspalt ausgebildeter erster Hohlraum 17, aus dem heraus durch eine Austrittsöffnung 23 der Metallhülse hindurch ein Kraftstofffluss 55 erfolgen kann. Die Metallhülse 11 ist an ihrem der Austrittsöffnung entgegengesetzten Ende von einem mit dem Grundblock 20 verbundenen Einschraubstutzen 22 umgeben, der zur Befestigung der Verdampfungsvorrichtung an der Seitenwand einer Abgasleitung dient. Der erste Hohlraum 17 ist über eine Verbindungsbohrung 21 im Grundblock 20 mit einem zweiten und einem dritten Hohlraum 18 bzw. 19 verbunden, denen eine zweite bzw. dritte Glühstiftkerze 12 bzw. 14 zugeordnet ist. Die beiden Glühstiftkerzen 12, 14 sind in länglicher Form ausgebildet und in einem von Null verschiedenen, spitzen Winkel zueinander angeordnet. Auf der einen Seite der Glühstiftkerzen sind ihre elektrischen Anschlüsse 40 bzw. 41 angebracht, ebenso wie bei der ersten Glühstiftkerze 9, deren elektrischer Anschluss 43 durch den Grundblock 20 hindurchgeführt ist. Die den elektrischen Anschlüssen 40, 41 gegenüberliegenden, abgerundeten Enden der Glühstiftkerzen 12 und 14 liegen näher beieinander als die Anschlüsse 40 und 41, wobei die als Ringspalte ausgebildeten zweiten und dritten Hohlräume 18 und 19 auf der elektrischen Anschlussseite der Glühstiftkerzen durch eine Wand 30 des Grundblocks 20 voneinander getrennt sind. Der Grundblock 20 ist so geformt, dass er zwei im wesentlichen parallele Außenflächen 44 und 45 aufweist, an denen er bspw. zu Reparaturarbeiten in einem Schraubstock eingespannt werden kann. Ein Einspritzventil 25 ist mit seiner Längsachse parallel zur Längserstreckung des Heizelementes 10 am Grundblock 20 mittels einer Halteplatte 26 befestigt, die über Schrauben 27 am Grundblock 20 arretiert ist. Die Halteplatte 26 dient zur lateralen Fixierung des Einspritzventils, während die axiale Befestigung über den Ventiladapter 24 beispielsweise in Verbindung mit einer Haltefeder erfolgt. Der Ventiladapter 24 ist nur teilweise sichtbar und erstreckt sich auf der in der Zeichnung nicht ersichtlichen Rückseite des Grundblocks 20. Der Ventiladapter 24 geht auf der Rückseite des Grundblocks 20 in eine winklige Kraftstoffzufuhrleitung 28 über, die am dem elektrischen Anschluss 40 benachbarten Ende des zweiten Hohlraumes 18 in diesen einmündet. Das Einspritzventil 25 ist bspw. als an sich bekanntes Niederdruckeinspritzventil ausgebildet; am im Ventiladapter 24 abgewandten Ende des Einspritzventils ist ein elektrischer Anschluss 42 sowie eine Versorgungsleitung 29 vorgesehen. Die Pfeile 51, 52, 53, 54 und 55 markieren die Richtung eines möglichen Reaktionsmittelflusses. Der Grundblock 20 ist insgesamt so ausgebildet, dass er über den Einschraubstutzen 22 an einer Abgasleitung befestigt werden kann, so dass das Heizelement 10 in die Abgasleitung hineinragt, entsprechend der Befestigung der aus der DE 196 25 447 A1 bekannten Vorrichtung. Die beiden Glühstiftkerzen 12 und 14 sind hierbei seitlich der Längsachse der Glühstiftkerze 9 angeordnet und bilden mit dieser Längsachse einen Winkel in einem Bereich zwischen 0° und 90°. Die in der Figur dargestellte Lage bildet dabei die Einbaulage der Vorrichtung an einer Abgasleitung, wobei das Heizelement 10 von unten in die Abgasleitung hineinragt. Im eingebauten Zustand ist also die Vorrichtung 1 dem Boden, auf dem das Kraftfahrzeug steht, näher benachbart als die Abgasleitung.

Das Reaktionsmittel, beispielsweise Kraftstoff, gelangt über das als Dosierventil verwendete Einspritzventil 25 in den Ventiladapter. Vom Ventiladapter 24 gelangt der Kraftstoff über die winklige Kraftstoffzufuhrleitung 28 zu den als Vorheizelemente eingesetzten Glühstiftkerzen 12 und 14. Durch die den Glühstiftkerzen zugeordneten Ringspalte strömt der Kraftstoff in Richtung der heißen Spitzen der Glühstifte. Auf dieser Wegstrecke wird der Kraftstoff kontinuierlich erwärmt und je nach Heizleistung bzw. Durchflussmenge auch schon verdampft. Durch die Verbindungsbohrung 21 gelangt der zumindest teilweise verdampfte Kraftstoff zum Heizelement 10, der für eine zuverlässige Verdampfung des Kraftstoffes sorgt. Der verdampfte Kraftstoff gelangt über die Austrittsöffnung 23 in den Abgastrakt. Die Einbaulage für die Vorrichtung 1 ist so gewählt, dass die zentral und konzentrisch zum Einschraubstutzen sitzende Glühstiftkerze 9 senkrecht zur Wandung der Abgasleitung steht. Die beiden vorgelagerten Glühstiftkerzen 12 bzw. 14 haben die Aufgabe, den Kraftstoff vorzuheizen. Hierbei wird, bei sehr geringen Kraftstoffdurchflussmengen, nur die im folgenden als Hauptvorheizelement bezeichnete Glühstiftkerze 12 mit flüssigem Kraftstoff umspült. In diesem Fall wird die Glühstiftkerze 14, bedingt durch ihre Lage im Grundblock, nicht umspült und somit nur wenig abgekühlt. Dadurch kann bei diesem Betriebspunkt der Energieverbrauch reduziert werden. Bei einem Betriebspunkt mit hoher Dosiermenge läuft auch der dritte Hohlraum 19 an der Glühstiftkerze 14 mit flüssigem Kraftstoff voll und wird somit von beiden Vorheizelementen erwärmt, bevor er über die Verbindungsbohrung 21 zum Heizelement 10 gelangt.

Alternativ zu Glühstiftkerzen können auch andere elektrische Heizelemente verwendet werden, bspw. solche, die das Reaktionsmittel mittels Mikrowellen erhitzen. Es sind auch, zusätzlich zu den beiden genannten Vorheizelementen 12 und 14, weitere Vorheizelemente denkbar, die nach dem gleichen Prinzip wie das Vorheizelement relativ zum Vorheizelement 12 angeordnet sind, die unterhalb des Elementes 14 vorzusehen sind. Es können auch Temperaturerfassungselemente vorgesehen werden, die die Temperatur der Glühstiftkerzen bzw. des Kraftstoffes erfassen. Hierbei kann ein Temperaturelement lediglich am Heizelement 10 oder aber auch zusätzlich an ausgewählten oder sämtlichen Vorheizelementen vorgesehen werden. Die Temperaturerfassungselemente können mit einem Steuergerät verbunden sein, das die elektrische Heizleistung entsprechend der Kraftstoffdurchflussmenge einstellt. Im Ausführungsbeispiel der Figur 1 ist es besonders vorteilhaft, das Vorheizelement 14 mit einem Temperaturerfassungselement zu versehen, da je nach Dosiermenge das Element von Kraftstoff umspült wird oder nicht und daher, bspw. zur Konstanthaltung der Temperatur des Vorheizelementes 14, je nach Dosiermenge unterschiedliche Heizleistungen für dieses Vorheizelement vorzusehen sind. Daher kann insbesondere vorgesehen sein, für jedes Heizelement eine separate Regelung der Zufuhr an elektrischer Leistung einzurichten. Als Heizelemente sind außerdem keramische Glühkörper vorsehbar, die auch von der in Figur 1 dargestellten Ausgestaltung abweichende Formen aufweisen können. Die einschraubbare Metallhülse 11 kann auch statt einer Austrittsöffnung 23 mehrere Austrittsöffnungen aufweisen, die auch bspw. je nach Kraftfahrzeugtyp, unterschiedliche Durchmesser oder Formen besitzen können. Austrittsöffnungen können auch an den Seitenwänden der Metallhülse angeordnet sein, die parallel zur Längserstreckung der Glühstiftkerze 9 liegen.

Figur 2 zeigt eine Verdampfungsvorrichtung, bei der eine Querschnittsansicht gewählt ist, deren Querschnittsebene senkrecht zur in Figur 1 gewählten Querschnittsansicht und senkrecht zur Glühstiftkerze 9 liegt. Gleiche oder ähnliche Elemente wie in Figur 1 sind mit gleichen Bezugszeichen bezeichnet und werden nicht nochmals beschrieben. Ebenso wie bei der Anordnung nach Figur 1 ist die Glühstiftkerze 9 samt Metallhülse 11 dazu eingerichtet, mittels des Einschraubstutzens 22, in die Abgasleitung hineinragend, an der Wandung der Abgasleitung befestigt zu werden, während die Vorheizelemente außerhalb der Abgasleitung angeordnet sind. Im Unterschied zu Figur 1 weist die Anordnung eine zweite Glühstiftkerze 120 und eine dritte Glühstiftkerze 140 auf, die in einer Ebene senkrecht zur Glühstiftkerze 9 liegen, deren zugeordnete Hohlräume 121 bzw. 141 symmetrisch über eine Zufuhrleitung 150 vom Einspritzventil 25 mit Reaktionsmittel versorgt werden können.

Hier werden beide Vorheizelemente 120 und 140 gleichermaßen mit flüssigem Medium umspült, so dass beide Vorheizelemente die gleiche elektrische Leistung verbrauchen; die beiden Vorheizelemente sind sozusagen "parallel geschaltet".

In einer alternativen Ausführung können weitere Vorheizelemente vorgesehen sein, deren Spitzen in der Nähe der Verbindungsbohrung 21 angeordnet sind, so dass aller Kraftstoff, der in den einzelnen, den Vorheizelementen zugeordneten Hohlräumen erwärmt worden ist, vor der Verbindungsbohrung gesammelt und vereinigt dem Heizelement 10 zugeführt werden kann. Dabei kann das Heizelement 10 in der in Figur 2 abgebildeten Querschnittsebene auch symmetrisch von Vorheizelementen umgeben sein.

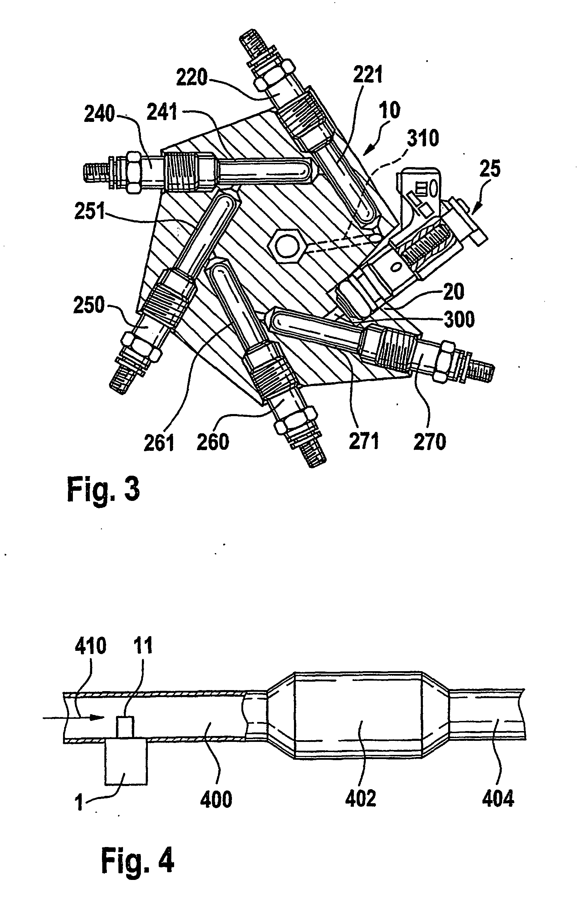

Figur 3 illustriert eine Verdampfungsvorrichtung mit einer sternförmigen Anordnung von Vorheizelementen. Die Lage der für die Querschnittsansicht gewählten Ebene relativ zum Heizelement 10 entspricht hierbei der in Figur 2 gewählten Ebenenlage. Die Anordnung weist fünf Vorheizelemente in Form von Glühstiftkerzen 220, 240, 250, 260 und 270 auf. Das in der Ebene der Vorheizelemente liegende Einspritzventil 25 ist über eine Zufuhrleitung 300 in Form einer Bohrung im Grundblock 20 mit dem die Glühstiftkerze 270 umgebenden Hohlraum 271 verbunden. Das als.Hauptvorheizelement 270 verwendete Vorheizelement ist über eine weitere Bohrung am Kopfende der Glühstiftkerze mit dem Hohlraum 261 der Glühstiftkerze 260 verbunden. In analoger Weise ist dies für die Hohlräume 251, 241, 221 der Glühstiftkerzen 250, 240 und 220 der Fall. Die Glühstiftkerze 220 schließlich ist in einem als Ringspalt ausgebildeten Hohlraum 221 eingeführt, der über eine Verbindungsbohrung 310 mit dem senkrecht zu den Vorheizelementen stehenden Heizelement 10 verbunden ist.

Bei dieser sternförmigen Anordnung von Vorheizelementen handelt es sich um eine Reihenschaltung, bei der der Kraftstoff beim Durchfließen der aufeinanderfolgenden Hohlräume 271, 261, 251, 241 und 221 sukzessive erwärmt wird.

In einer alternativen Ausgestaltung kann diese sternförmige Anordnung mit Temperaturerfassungselementen für jedes einzelne Heizelement versehen sein, um insbesondere jedes Vorheizelement optimal und energiesparend mit Strom zu versorgen, da die erforderlichen Heizleistungen von der Lage des jeweiligen Vorheizelementes abhängen, so dass jedes Vorheizelement in einer vorteilhaften Ausführungsform von einer eigenen Endstufenschaltung angesteuert werden kann. Auch bei der sternförmigen Anordnung können mehr, aber auch weniger als fünf Vorheizelemente vorgesehen sein, die sternförmig um das senkrecht stehenden Heizelement 10 angeordnet sind.

Figur 4 zeigt in schematischer Darstellung eine in den Figuren 1 bis 3 beschriebene Vorrichtung 1, deren Metallhülse 11 in die Abgasleitung 400 hineinragt. Der Pfeil 410 markiert die Strömungsrichtung des Abgases. Stromabwärts der Vorrichtung 1 ist ein als katalytischer Brenner ausgeführter Katalysatorkörper 402 angeordnet, an dessen Ausgang eine Verbindungsleitung 404 zu einer nachgeordneten Abgasnachbehandlungseinheit angeschlossen ist.

Die Vorrichtung 1 dient zur dosierten Einführung verdampften Reaktionsmittels, insbesondere Kraftstoff, vor der Katalysatoranordnung 402. Im Katalysator 402 wird das zugeführte Reaktionsmittel oxidiert und so die Abgastemperatur erhöht. In einer nachgeordneten Abgasnachbehandlungseinheit, sei es ein Speicherkatalysator oder ein Partikelfilter, liegen dann günstige Temperaturbedingungen zur Regeneration der jeweils verwendeten Abgasnachbehandlungseinheit vor.

Alternativ kann anstelle des Katalysators 402 und einer nachgeordneten Abgasnachbehandlungseinheit ausschließlich ein hinter der Vorrichtung 1 angeordneter Speicherkatalysator zur Reduktion von Stickoxiden vorgesehen sein. In diesem Fall wird der im dampfförmigen Zustand zugeführte Kraftstoff zur Reduktion eingelagerten Stickstoffdioxids und damit zur Regeneration des Speicherkatalysators verwendet. Die erfindungsgemäße Vorrichtung 1 kann ebenfalls zur äußeren Gemischbildung bei selbstzündenden Brennkraftmaschinen verwendet werden, um die Ansaugluft zum Zwecke einer homogeneren Verbrennung mit Kraftstoff anzureichern.

## Patentansprüche

1. Vorrichtung zur Nachbehandlung des Abgases einer Brennkraftmaschine, mit einer Verdampfungseinrichtung zum Einbringen eines Reaktionsmittels zur Nachbehandlung in eine das Abgas führende Abgasleitung, wobei die Verdampfungseinrichtung ein in die Abgasleitung einbringbares Heizelement aufweist, **dadurch gekennzeichnet, dass** mindestens zwei Vorheizelemente (12, 14; 120, 140; 220, 240, 250, 260, 270) ausserhalb der Abgasleitung (400) zur Vorheizung des Reaktionsmittels vorgesehen sind, wobei die mindestens zwei Vorheizelemente derart angeordnet sind, dass eines der Vorheizelemente (12; 270) über eine Zufuhrleitung (28; 300) mit Reaktionsmittel versorgbar ist, wobei dieses Vorheizelement im Folgenden auch als Hauptvorheizelement bezeichnet wird, und dass das andere beziehungsweise die anderen Vorheizelemente (14; 260, 250, 240, 220) über einen Abfluss von Reaktionsmittel aus dem jeweils vorgelagerten Vorheizelement (12; 270, 260, 250, 240) versorgt werden können, wobei das erhitzte Reaktionsmittel anschließend über eine Verbindungsleitung (21; 310) dem Heizelement (10) zugeführt werden kann, und dass das andere beziehungsweise die anderen Vorheizelemente (14) derart relativ zum Hauptvorheizelement (12) und relativ zur Verbindungsleitung (21) angeordnet sind, dass eine Beheizung des Reaktionsmittels durch die anderen Vorheizelemente (14) zusätzlich zum Hauptvorheizelement (12) in Abhängigkeit von der Durchflussmenge des Reaktionsmittels erfolgen kann.

2. Vorrichtung nach Anspruch 1, **dadurch gekennzeichnet, dass** das Heizelement (10) und das mindestens eine Vorheizelement an einem gemeinsamen Grundblock (20) angeordnet sind.

3. Vorrichtung nach Anspruch 1 und 2, **dadurch gekennzeichnet, dass** die Verbindungsleitung (21; 310) als Bohrung im Grundblock ausgeführt ist.

4. Vorrichtung nach einem der vorhergehenden Ansprüche, **dadurch gekennzeichnet; dass** das Heizelement (10) einen mit dem Reaktionsmittel befüllbaren Hohlraum (17) aufweist.

5. Vorrichtung nach Anspruch 4, **dadurch gekennzeichnet, dass** der Hohlraum (17) des Heizelements (10) durch einen Ringspalt zwischen einem Heizkörper (9) des Heizelements und einer Metallhülse (11) des Heizelements gebildet ist, wobei die Metallhülse auf der in die Abgasleitung (400) ragenden Seite mindestens eine Austrittsöffnung (23) aufweist.

6. Vorrichtung nach Anspruch 2 und 5, **dadurch gekennzeichnet, dass** die Metallhülse (11) am Grundblock (20) befestigt, insbesondere eingeschraubt, ist.

7. Vorrichtung nach einem der vorhergehenden Ansprüche, **dadurch gekennzeichnet, dass** das mindestens eine Vorheizelement (12, 14; 120, 140; 220, 240, 250, 260, 270) einen mit dem Reaktionsmittel befüllbaren Hohlraum (18, 19; 121, 141; 221, 251, 261, 271) aufweist.

8. Vorrichtung nach Anspruch 7, **dadurch gekennzeichnet, dass** ein Einspritzventil (25) mit dem Hohlraum (18; 121, 141; 271) des mindestens einen Vorheizelements verbunden (24, 28; 150; 300) ist zur dosierten Zuführung des Reaktionsmittels in den Hohlraum.

9. Vorrichtung nach Anspruch 8, **dadurch gekennzeichnet, dass** das Einspritzventil am Grundblock befestigt (26, 27) ist.

10. Vorrichtung nach einem der vorhergehenden Ansprüche, **dadurch gekennzeichnet, dass** das Heizelement und/oder das mindestens eine Vorheizelement einen elektrisch beheizbaren Glühstift oder einen elektrisch beheizbaren keramischen Glühkörper als Heizkörper aufweisen.

11. Vorrichtung nach einem der vorhergehenden Ansprüche, **dadurch gekennzeichnet, dass** Kraftstoff als Reaktionsmittel verwendbar ist.

## Claims

1. Apparatus for the aftertreatment of the exhaust gas from an internal combustion engine, having an evaporation device for introducing a reagent for the aftertreatment into an exhaust pipe which carries the exhaust gas, the evaporation device having a heating element which can be introduced into the exhaust pipe, **characterized in that** at least two preheating elements (12, 14; 120, 140; 220, 240, 250, 260, 270) are provided outside the exhaust pipe (400) in order to preheat the reagent, the at least two preheating elements being arranged in such a manner that one of the preheating elements (12; 270) can be supplied with reagent via a feedline (28; 300), this preheating element also being referred to below as the main preheating element, and **in that** the other preheating element(s) (14; 260, 250, 240, 220) can be supplied via a reagent outlet from the preheating element (12; 270, 260, 250, 240) which is in each case connected upstream thereof, it then being possible for the heated reagent to be fed via a connecting line (21; 310) to the heating element (10), and **in that** the other preheating element(s) (14) are arranged in such a manner relative to the main preheating element (12) and relative to the connecting line (21) that the reagent can be heated by the other preheating elements (14) in addition to the main preheating element (12) as a function of the quantitative flow of the reagent.

2. Apparatus according to Claim 1, **characterized in that** the heating element (10) and the at least one preheating element are arranged on a common base block (20).

3. Apparatus according to Claims 1 and 2, **characterized in that** the connecting line (21; 310) is designed as a hole in the base block.

4. Apparatus according to one of the preceding claims, **characterized in that** the heating element (10) has a cavity (17) which can be filled with the reagent.

5. Apparatus according to Claim 4, **characterized in that** the cavity (17) in the heating element (10) is formed by an annular gap between a heating body (9) of the heating element and a metal sleeve (11) of the heating element, the metal sleeve having at least one exit opening (23) on the side which projects into the exhaust pipe (400).

6. Apparatus according to Claims 2 and 5, **characterized in that** the metal sleeve (11) is secured to the base block (20), in particular is screwed into it.

7. Apparatus according to one of the preceding claims, **characterized in that** the at least one preheating element (12, 14; 120, 140; 220, 240, 250, 260, 270) has a cavity (18, 19; 121, 141; 221, 251, 261, 271) which can be filled with the reagent.

8. Apparatus according to Claim 7, **characterized in that** an injection valve (25) is connected (24, 28; 150; 300) to the cavity (18; 121, 141; 271) in the at least one preheating element for metered supply of the reagent into the cavity.

9. Apparatus according to Claim 8, **characterized in that** the injection valve is secured (26, 27) to the base block.

10. Apparatus according to one of the preceding claims, **characterized in that** the heating element and/or the at least one preheating element have an electrically heatable sheathed element or an electrically heatable ceramic glow body as the heating body.

11. Apparatus according to one of the preceding claims, **characterized in that** fuel can be used as reagent.

## Revendications

1. Dispositif de post-traitement des gaz d'échappement d'un moteur à combustion interne, comportant un dispositif de vaporisation pour introduire, dans une conduite où circulent les gaz d'échappement, un agent réactif pour assurer le traitement ultérieur, le dispositif de vaporisation présentant un élément chauffant qui peut être introduit dans la conduite des gaz d'échappement,
**caractérisé en ce que**
- il est prévu au moins deux éléments de préchauffage (12, 14 ; 120, 140 ; 220, 240, 250, 260, 270) situés à l'extérieur de la conduite de gaz d'échappement (400) pour préchauffer l'agent réactif, au moins deux éléments de préchauffage étant disposés de manière que l'un d'eux (12 ; 270) peut être alimenté en agent réactif par une conduite d'amenée (28 ; 300), cet élément étant appelé par la suite élément de préchauffage principal, tandis que le ou les autres éléments de préchauffage (14 ; 260, 250, 240, 220) peuvent être alimentés par un courant d'agent réactif sortant de l'élément de préchauffage situé en amont (12 ; 270, 260, 250, 240), et
- l'agent réactif échauffé peut être ensuite amené par une conduite de liaison (21 ; 310) à l'élément chauffant (10), tandis que le ou les autres éléments de préchauffage (14) sont disposés, par rapport à l'élément de chauffage principal (12) et par rapport à la conduite de liaison (21), de manière qu'un chauffage de l'agent réactif peut être assuré par les autres éléments de préchauffage (14), en plus de l'élément de préchauffage principal (12), en fonction du débit de l'agent réactif.

2. Dispositif selon la revendication 1,
**caractérisé en ce que**
l'élément chauffant (10) et au moins un élément de préchauffage sont montés sur un bloc de base (20) commun.

3. Dispositif selon les revendications 1 et 2,
**caractérisé en ce que** la conduite de liaison (21, 310) est constitué par un alésage dans le bloc de base.

4. Dispositif selon une des revendications précédentes,
**caractérisé en ce que**
l'élément chauffant (10) présente un espace creux (17) qui peut être rempli par l'agent réactif.

5. Dispositif selon la revendication 4,
**caractérisé en ce que**
l'espace creux (17) de l'élément chauffant (10) est constitué par une fente annulaire entre un corps de chauffage (9) de l'élément chauffant et une douille métallique (11) de cet élément, la douille présentant du côté qui pénètre dans la conduite de gaz d'échappement (400) au moins une ouverture de sortie (23).

6. Dispositif selon les revendications 2 et 5,
**caractérisé en ce que**
la douille métallique (11) est fixée sur le bloc de base (20), notamment par vissage.

7. Dispositif selon une des revendications précédentes,
**caractérisé en ce qu'**
au moins un élément de préchauffage (12, 14 ; 120, 140 ; 220, 240, 250, 260, 270) présente un espace creux (18, 19 ; 121, 141 ; 221, 251, 261, 271) qui peut être rempli par l'agent réactif.

8. Dispositif selon la revendication 7,
**caractérisé en ce qu'**
à l'espace creux (18 ; 121, 141 ; 271) d'au moins un élément de préchauffage (24, 28 ; 150 ; 300) est relié un injecteur (25) pour introduire de manière dosée l'agent réactif dans l'espace creux.

9. Dispositif selon la revendication 8,
**caractérisé en ce que**
l'injecteur est fixé sur le bloc de base (26, 27).

10. Dispositif selon une des revendications précédentes,
**caractérisé en ce que**
l'élément chauffant et/ou au moins un élément de préchauffage présente, en tant que corps de chauffage, un crayon de préchauffage ou un corps de préchauffage en céramique pouvant être échauffé électriquement .

11. Dispositif selon une des revendications précédentes,
**caractérisé en ce qu'**
on peut utiliser du carburant comme agent réactif.
